# EUROPEAN PATENT APPLICATION

(11) **EP 3 107 316 A1**
(43) Date of publication of application: **21.12.2016**
(21) Application number: 16157496.7
(22) Date of filing: 26.02.2016
(51) Int. Cl.: H04W 4/00, H04W 84/18

(54) **BROADCASTING PAIRING SIGNAL AND RESPONDING TO IT**

(30) Priority: 15.06.2015 JP 2015120655
(71) Applicant: CASIO COMPUTER CO., LTD., Shibuya-ku, Tokyo 151-8543 (JP)
(72) Inventor: MURAYAMA, Yoichi, Tokyo 205-8555 (JP); ASO, Asami, Tokyo 205-8555 (JP); YOSHIDA, Toshihiko, Tokyo 205-8555 (JP); KAWAKAMI, Gou, Tokyo 205-8555 (JP); KAWAHARA, Kazuma, Tokyo 205-8555 (JP); KAWASHIMO, Takashi, Tokyo 205-8555 (JP)
(74) Representative: Grünecker Patent- und Rechtsanwälte PartG mbB

(57) **Abstract**

A processor (11) of an information transmission device (100) generates pairing information being divided into multiple pieces according to a predetermined data structure and for starting bidirectional communication between a portable terminal and the information transmission device. The processor (11) transmits generated pairing information being divided into multiple pieces. The processor (11) receives a pairing request signal transmitted by the portable terminal that receives the pairing information. The processor (11) performs a pairing operation with the portable terminal in response to the pairing request signal received.

## Description

This disclosure relates to an information transmission device, an information transmission method and a portable terminal.

Conventionally, bidirectional short distance radio communication is carried out in accordance with Bluetooth (registered trademark). For example, Unexamined Japanese Patent Application Kokai Publication No. 2009-60526, which is a Japanese patent literature, describes technique that exchanges, in order to start bidirectional communication in accordance with Bluetooth, information that is necessary for paring in accordance with Bluetooth by using a non-contact integrated circuit (IC) module according to near field communication (NFC).

In recent years, a service that provides portable terminals or the like with advertising information in a push type method by using a beacon in accordance with Bluetooth Low Energy (BLE) is known.

Generally speaking, the beacon is specialized for a push notification, and is not supposed to perform bidirectional communication with a notified partner terminal.

Therefore, an information transmission device (for example, such as a signage) having a function to transmit a beacon cannot transmit or receive information with a portable terminal which is a notified partner.

Furthermore, depending on a data structure of a transmission method for transmitting pairing information for starting bidirectional communication, bidirectional communication cannot be started due to insufficient data capacity when transmitting the pairing information.

Therefore, an objective of the present disclosure is to provide an information transmission device or the like that can suitably start bidirectional communication even if data with large capacity is transmitted.

In order to achieve the purpose described above, the information transmission device according to the first aspect of the present disclosure is an information transmission device for performing bidirectional communication with a portable terminal, the information transmission device comprising:
a processor; and
a radio communicator that performs bidirectional communication between the portable terminal and the information transmission device in response to an instruction from the processor,
wherein the processor generates pairing information being divided into multiple pieces according to a predetermined data structure and for starting bidirectional communication between the portable terminal and the information transmission device;
the processor transmits the pairing information;
the processor receives a pairing request signal transmitted by the portable terminal that receives the pairing information; and
the processor performs a pairing operation with the portable terminal in response to the pairing request signal received.

In order to achieve the purpose described above, a portable terminal according to the second aspect of the present disclosure is a portable terminal that performs bidirectional communication with an information transmission device comprising:
a processor; and
a radio communicator that performs bidirectional communication between the information transmission device and the portable terminal in response to an instruction from the processor,
wherein the processor receives pairing information transmitted by the information transmission device;
the processor transmits a pairing request signal to the information transmission device after receiving the pairing information; and
the pairing information is information being divided multiple pieces according to a predetermined data structure and for starting bidirectional communication with the information transmission device.

A more complete understanding of this disclosure can be obtained when following detailed description is considered in conjunction with following drawings, in which:
FIG. 1 is a drawing illustrating a configuration example of an information transmission system according to an embodiment;
FIG. 2 is a block diagram illustrating a configuration of an information transmission device according to the embodiment;
FIG. 3 is a drawing illustrating an example of transmission information transmitted by the information transmission device;
FIG. 4 is a drawing illustrating an example of a transmission interval of the information transmission device;
FIG. 5 is a block diagram illustrating a configuration of a portable terminal according to the embodiment;
FIG. 6 is a flow chart of a transmission process of the information transmission device;
FIG. 7 is a flow chart of a pairing process of the information transmission device;
FIG. 8 is a flow chart of a pairing process of the portable terminal;
FIG. 9 is a drawing illustrating a sequence related to a pairing between the information transmission device and the portable terminal;
FIG. 10 is a drawing illustrating a sequence according to a pairing between an information transmission device and a portable terminal in a modified example.

Hereinafter, an embodiment of the present disclosure is described in detail with reference to drawings.

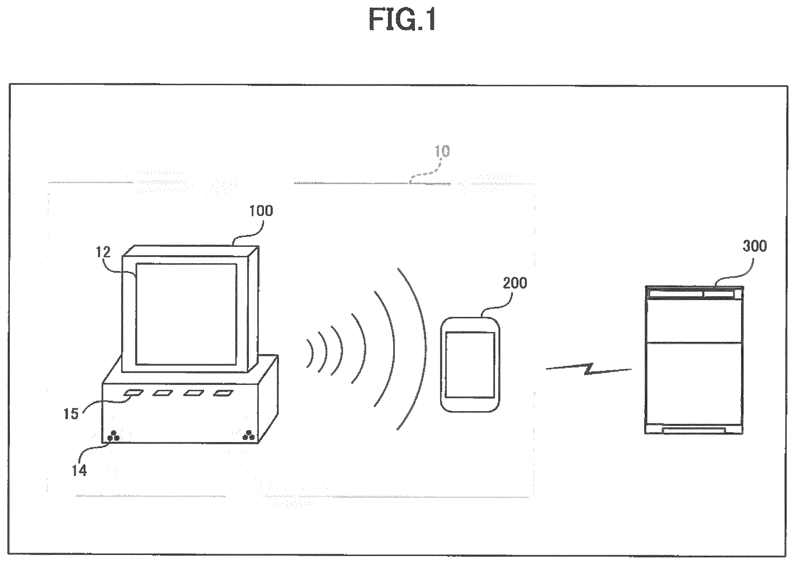

FIG. 1 is a schematic drawing illustrating a configuration example of an information transmission system according to an embodiment of the present disclosure.

The information transmission system 10 comprises an information transmission device 100 and a portable terminal 200.

The information transmission device 100 is a signage (also known as an electronic advertising display) that is installed at store front and outputs advertisement contents (for example, the contents regarding a store and its products) on a display 12. The information transmission device 100 comprises a speaker 13 for performing voice guidance while advertisement contents are displayed and an operator 14 for changing advertisement contents.

The information transmission device 100 comprises, as communication functions, (i) a unidirectional transmission function using a beacon module; and (ii) a bidirectional communication function in accordance with Bluetooth. The transmission function using a beacon module uses radio waves of 2.4GHz band for short distance radio communication in accordance with BLE (Bluetooth Low Energy). The BLE is a standard (mode) developed for a purpose of low power consumption in accordance with Bluetooth that is a short distance radio communication standard. Details of the communication functions (i) and (ii) will be described later.

On the other hand, the portable terminal 200 is a smartphone and performs an event process which will be triggered by a reception of transmission information transmitted by the information transmission device 100. For example, if the transmission information is advertising information, the portable terminal 200 accesses a content distribution server 300 by 4G or Wi-Fi (registered trademark), and acquires advertisement contents.

A user pre-installs an application program for performing the event process in portable terminal 200. In this way, the event process can be automatically executed in a background of the portable terminal 200 when the user with the portable terminal 200 enters a cell range of the information transmission device 100. The cell range is a coverage range where a radio wave in accordance with BLE reaches.

Heretofore, an outline of each device (information transmission device 100 and portable terminal 200) of information transmission system 10 in the present embodiment is described. In the present embodiment, one of characteristic features is that the pairing, necessary for starting bidirectional communication of aforementioned (ii) between the information transmission device 100 and the portable terminal 200 in accordance with Bluetooth, is performed using the transmission function of aforementioned (i). Hereinafter, each device composing the information transmission system 10 will be described one by one.

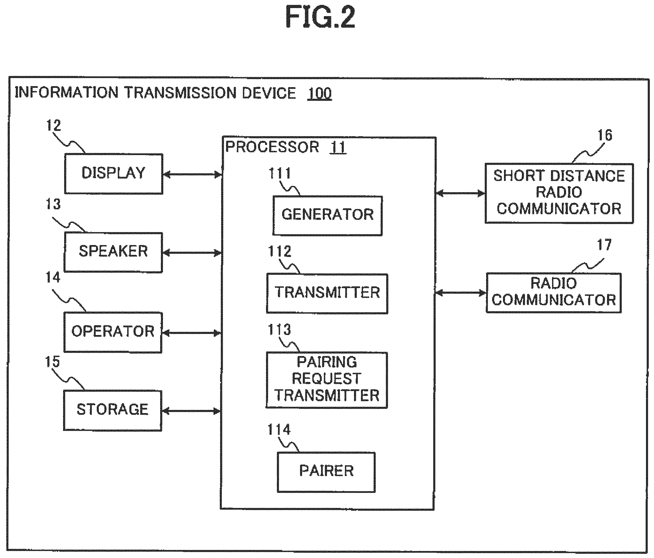

As illustrated in FIG. 2, the information transmission device 100 comprises a processor 11, a display 12, a speaker 13, an operator 14, storage 15, a short distance radio communicator 16, and a radio communicator 17.

The processor 11 is composed of a central processing unit (CPU), a read only memory (ROM), a random access memory (RAM) or the like. The processor 11 realizes each functional component of the information transmission device 100 (a generator 111, a transmitter 112, a pairing request receiver 113, and a pairer 114) by executing a program (for example, a program related to a transmission process or a pairing process described later) stored in the ROM. The generator 111, the transmitter 112, the pairing request receiver 113, and the pairer 114 may be realized by a single processor, or each operation may be performed in separate processors.

The display 12 is composed of, for example, a liquid crystal display (LCD), an electroluminescence (EL) display or the like, and outputs advertisement contents.

The speaker 13 is a sound output unit that outputs a sound to the exterior. For example, if content is a movie with sounds, the speaker 13 outputs the sounds of the movie to the exterior as audible sounds.

The operators 14 is four buttons disposed in front of a support stand which supports the display 12 and be operated by a user. The user instructs, for example, the information transmission device 100 to change contents, to start or stop contents or the like by the operator 14.

The storage 15 is a nonvolatile memory such as a hard disk drive (HDD) or the like.

The storage 15 stores various contents to be output by the display 12. The contents to be output by the display 12 may be acquired from the content distribution server 300 by radio communication in accordance with 4G, Wi-Fi or the like.

The short distance radio communicator 16 is composed of a circuit block (large scale integration (LSI) in accordance with BLE) for short distance radio communication in accordance with Bluetooth, an antenna or the like. The processor 11 performs a beacon transmission function in accordance with BLE, bidirectional communication in accordance with Bluetooth by the short distance radio communicator 16.

The radio communicator 17 is composed of an antenna, a circuit block for radio communication based on Wi-Fi or 4G, or the like. The processor 11 performs radio communication by Wi-Fi or 4G with an external device (for example, content distribution server 300 or the like) by the radio communicator 17.

Next, the functions of the processor 11 will be explained.

First, the generator 111 generates transmission information to be transmitted by the transmitter 112. In the present embodiment, the transmission information is a packet of advertisement in accordance with BLE. Generally, the packet of the advertisement is advertised (transmitted) to notify a service outline or the like held by the information transmission device 100.

Here, the generator 111 generates information of a payload portion (a body of data) of a packet excluding additional information such as a header portion or a trailer portion of the packet as transmission information. In the present embodiment, a data structure of the payload portion is composed of, as an example, a universally unique identifier (UUID), a Major, and a Minor.

The UUID is an identifier having 128 bits and, for example, if the transmission information is for advertising of an advertisement, is used in a unit of organization such as a corporation.

The Major is an identifier having 16 bits (2 bytes) and, for example, if the transmission information is for advertising of an advertisement, is used in a unit of large-scale facility (such as a shopping mall).

The Minor is an identifier having 16 bits (2 bytes) and, for example, if the transmission information is for advertising of an advertisement, is used in each store in a facility.

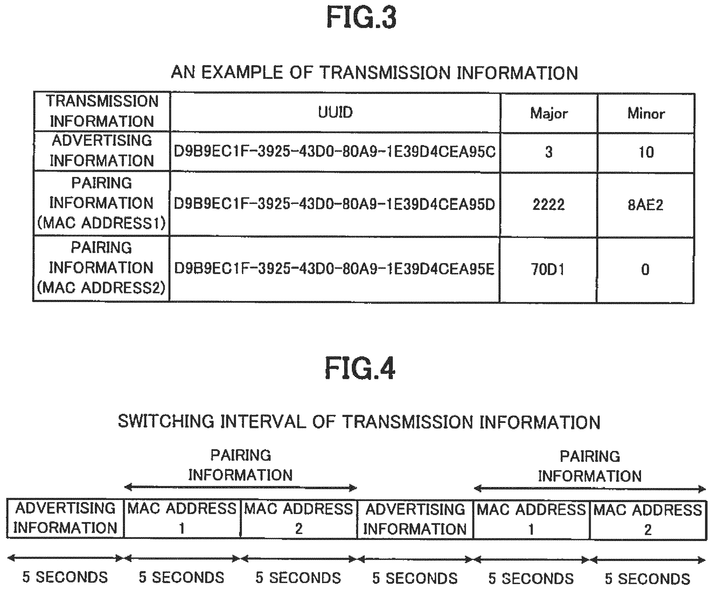

The generator 111 generates transmission information by generating each value of the UUID, the Major and the Minor. Here, an example of the transmission information is illustrated in FIG. 3. In the present embodiment, the transmission information is advertising information and pairing information. The UUID, the Major and the Minor are expressed as hexadecimal numbers.

The generator 111, for example, generates UUID "D9B9EC1F-3925-43D0-80A9-1 E39D4CEA95C", Major "3", and Minor "10" as advertising information for acquiring advertisement contents. In this way, advertising information of a store identified by the Minor "10" in a large facility identified by the Major "3" is generated.

On the other hand, the pairing information is a MAC address (also known as Bluetooth Device Address) for starting bidirectional communication in accordance with Bluetooth between the portable terminal 200 and the information transmission device 100. This MAC address is an address for uniquely identifying a beacon module. As the beacon module is associated one to one with the information transmission device 100, the MAC address is substantially an address for uniquely identifying the information transmission device 100.

The MAC address is expressed, for example, by a 6 byte hexadecimal number such as 22:22:8A:E2:70:D1. Therefore, the Major and the Minor, having 2 bytes each, cannot store all of the MAC address.

Therefore, the generator 111 divides the 6 bytes MAC address into three addresses and. as illustrated in FIG. 3, and generates 2 bytes (Major "2222", Minor "8AE2", and Major "70D1") at a time. In this way, the generator 111 divides the MAC address into multiple addresses according to the specification of the data structure (in the present embodiment, the Major and the Minor each having 2 bytes).

If there is no restriction on the specification of the data structure, the generator 111 may generate a MAC address having 6 bytes. The values of UUIDs of advertising information, pairing information (MAC address 1), and another pairing information (MAC address 2) are identical except the last digits thereof, the last digits being "C", "D" and "E" respectively. Therefore, hereinafter, each UUID is simply referred to as "C", "D" and "E".

Returning to FIG. 2, the transmitter 112 transmits the generated transmission information (advertising information and pairing information). The transmitter 112 unidirectionally transmits, by the beacon module in accordance with BLE, the advertising information and the pairing information by turns.

Here, FIG. 4 illustrates a switching interval of the transmission information (advertising information and pairing information). In the present embodiment, as an example, the transmitter 112 transmits either one of the advertising information or the pairing information (MAC address 1 and MAC address 2 into which the pairing information is divided), and the one to be transmitted is alternately switched at five seconds interval. In other words, after the transmitter 112 transmitted the advertising information at a predetermined time interval (for example, time interval of 0.1 seconds) for five seconds, the transmitter 112 transmits the pairing information (MAC address 1) at a predetermined time interval for five seconds. Needless to say, timing of switching and time interval of transmission (in the present embodiment, switching at five seconds interval and transmitting at 0.1 seconds interval) may be appropriately modified.

Here, assume that a user passes by a neighborhood of a store where the information transmission device 100 is installed and transmitting advertising information. Then, the portable terminal 200 receives the advertising information, inquires the content distribution server 300 in the background and displays the advertisement contents (store/product information, coupon or the like) of the store on the terminal screen. This stimulates the purchasing will of the user and attracts the user to the store.

On the other hand, assume that a user passes by a neighborhood of a store where an information transmission device 100 is installed and transmitting pairing information (MAC address 1, MAC address 2). Then, the portable terminal 200 receives the paring information, and automatically performs pairing process in the background. This process will be described later.

Returning to FIG. 2, the pairing request receiver 113 receives a pairing request signal transmitted by the portable terminal 200 according to the pairing information transmitted by the transmitter 112. Specifically, the pairing request receiver 113 receives a pairing request signal transmitted by the portable terminal 200 in response to the transmitted MAC address.

Next, the pairer 114 performs pairing with the portable terminal 200 in response to the pairing request signal received by the pairing request receiver 113. Specific procedures of the pairing will be described later.

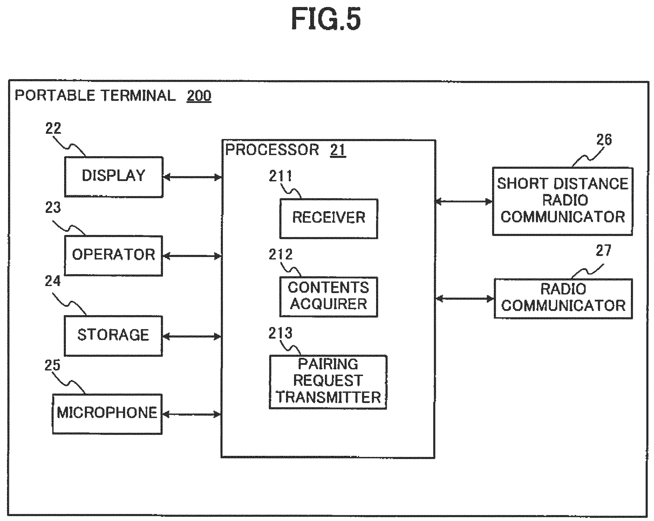

Next, with reference to FIG. 5, a configuration of the portable terminal 200 which is a smartphone will be explained. As shown in FIG. 5, the portable terminal 200 comprises a processor 21, a display 22, an operator 23, storage 24, a microphone 25, a short distance radio communicator 26, and a radio communicator 27.

The processor 21 is composed of a CPU, a RAM or the like. The processor 21 realizes each functional component of the portable terminal 200 (a receiver 211, a content acquirer 212, and a pairing request transmitter 213) by executing a program (for example, a program related to a pairing process described later) stored in the storage 24. The receiver 211, the content acquirer 212, and the pairing request transmitter 213 may be realized by a single processor, or each operation may be performed in separate processors.

The display 22 is a terminal screen composed of, for example, an LCD, an EL display or the like. Advertisement contents acquired from the content distribution server 300, for example, are displayed on the display 22.

The operator 23 is a touch panel disposed on a top surface of the display 22 and is used for inputting operation contents by the user, a button for supplying power or the like.

The storage 24 is internal storage in a smartphone having several gigabytes and is composed of a built-in flash memory or the like. The storage 24 stores various application programs of the smartphone, an imaged photograph or a movie or the like.

In the present embodiment, particularly, the storage 24 stores an application program for using transmission information transmitted by the information transmission device 100. This program is stored in the storage 24 by pre-installation of the application program in the portable terminal 200 by the user. The storage 24 stores the UUIDs "C", "D" and "E" illustrated in FIG. 3 by this installation of the application program.

The microphone 25 is a sound inputter for collecting external sounds.

The short distance radio communicator 26 is composed of an antenna, a circuit block for short distance radio communications in accordance with Bluetooth or the like. The processor 21 receives transmission information transmitted in accordance with BLE, and performs bidirectional communication in accordance with Bluetooth by the short distance radio communicator 26.

The radio communicator 27 is composed of an antenna, a circuit block for radio communications by Wi-Fi or 4G or the like. The processor 21 performs radio communication by Wi-Fi or 4G with an external device (for example, the content distribution server 300) by the radio communicator 27.

Next, functions of the processor 21 will be explained.

First, the receiver 211 receives the transmission information transmitted by the transmitter 112 of the information transmission device 100. Specifically, the receiver 211 receives the advertising information and the pairing information transmitted in accordance with BLE. When a MAC address, which is the pairing information, is divided, the receiver 211 adds these divided addresses with one another to restore the MAC address. Procedures for this restoration may be stored in the storage 24 when the application program is installed.

The receiver 211 monitors UUIDs "C", "D" and "E" stored in the storage 24. When the UUIDs in the received transmission information differ from stored UUIDs, processes by the content acquirer 212 and the pairing request transmitter 213 which will be explained later are not performed. In other words, the content acquirer 212 and the pairing request transmitter 213 come to their respective functions, when received UUIDs matches stored UUIDs, as a response event process to this match.

The content acquirer 212 acquires advertisement contents based on advertising information. Specifically, the content acquirer 212 acquires advertisement contents corresponding to the received advertising information (UUID "C", Major "3", and Minor "10") from the content distribution server 300 by radio communication by 4G or Wi-Fi. Acquired advertisement contents are displayed on the display 22. Advertisement contents do not have to be acquired from the content distribution server 300. Contents corresponding to a pre-installed application program may be read out from the storage 24 and displayed on the display 22.

Next, the pairing request transmitter 213 transmits a pairing request signal to the information transmission device 100 in response to reception of the paring information by the receiver 211. Pairing with the information transmission device 100 is performed by this transmission. Specific procedure of the pairing will be described later.

Heretofore, configurations of the information transmission device 100 and the portable terminal 200 are explained. Hereinafter, a transmission process and a pairing process performed by the information transmission device 100 will be sequentially explained.

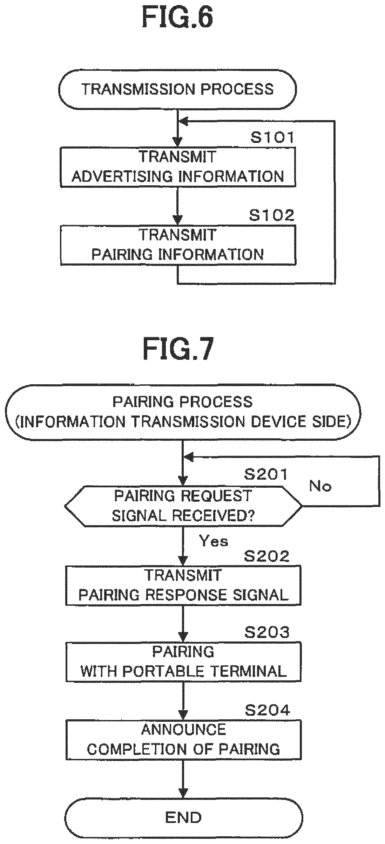

First, the transmission process will be explained with reference to FIG. 6. The transmission process is started in response to turning-on of a transmission function of a beacon module in the information transmission device 100. The transmission function is turned on when power of the information transmission device 100 is turned on or by an instruction by an installer or the like.

First, the transmitter 112 transmits advertising information (step S101). Specifically, the transmitter 112 transmits (advertises) advertising information illustrated in FIG. 3 (UUID "C", Major "3", Minor "10") to its neighborhood in accordance with BLE.

Next, the transmitter 112 transmits pairing information (step S102). Specifically, the transmitter 112 transmits the pairing information of divided MAC address illustrated in FIG. 3 (MAC address 1) five seconds after transmission of the advertising information is started. Then, the transmitter 112 transmits the pairing information of divided MAC address 2 illustrated in FIG. 3 five seconds after this transmission. After step S 102, process returns to step S101.

The information transmission device 100 repeats alternate transmission of the advertising information and the pairing information at five seconds interval according to this transmission process until transmission function is turned off.

Next, a pairing process on a side of the information transmission device 100 will be explained with reference to FIG. 7. The pairing process is carried out using the Bluetooth communication function.

First, as illustrated in FIG. 7, the pairing process waits until the pairing request receiver 113 receives a pairing request signal from the portable terminal 200 (step S201; No), and is started in response to reception of the pairing request signal (step S201; Yes).

When a pairing request signal transmitted by the portable terminal 200 in response to the paring information transmitted by the transmitter 112 is received (step S201; Yes), the pairer 114 transmits a pairing response signal (step S202). Specifically, the pairer 114 transmits a pairing response signal including a recognition number (pin code) for mutual recognition to the portable terminal 200 as a response to the pairing request signal received.

Next, the pairer 114 performs pairing with the portable terminal 200 (step S203). Specifically, the pairer 114 performs the pairing with the portable terminal 200 by performing mutual recognition using a common recognition number.

Next, the processor 11 announces completion of the pairing (step S204). Specifically, the processor 11 announces completion of the pairing by displaying on the display 12, by making a sound using the speaker 13 or the like. The processor 11 may, for example, display a device name of paired portable terminal 200 on the display 12. The pairing process is terminated after step S204.

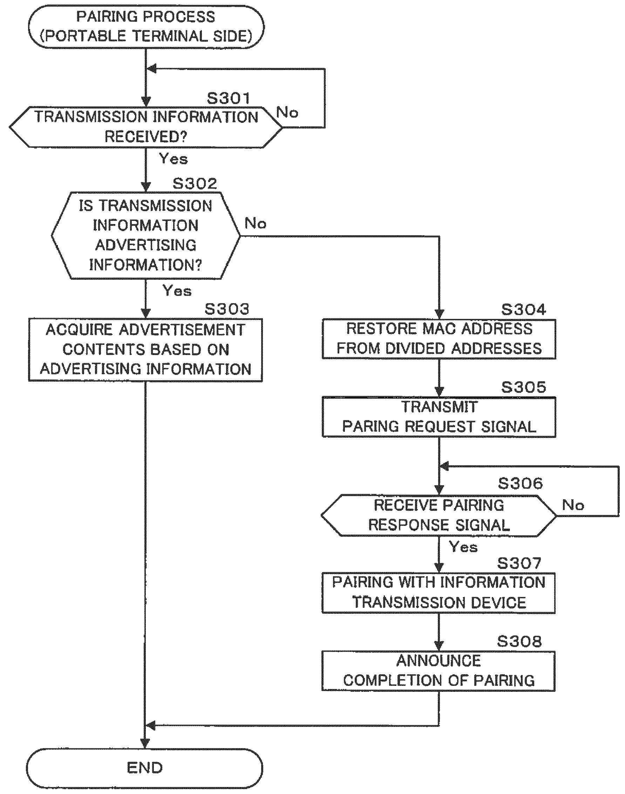

Heretofore, the transmission process and the pairing process performed by the information transmission device 100 are explained. Hereinafter, with reference to FIG. 8, the pairing process performed by the portable terminal 200 will be explained. The process is started in response to entering by a user having the portable terminal 200 into a cell range of the information transmission device 100. Hereinafter, explanations are made on the assumption that the user has pre-installed an application program in the portable terminal 200, and the UUIDs "C", "D" and "E" illustrated in FIG. 3 are pre-stored in the portable terminal 200.

First, the receiver 211 determines whether the receiver 211 has received transmission information (step S301). Here, the receiver 211 waits until the receiver 211 receives the transmission information from the information transmission device 100 (step S301; No). When the receiver 211 receives the transmission information (step S301; Yes), the receiver 211 determines whether the transmission information is advertising information (step S302). The process of step S302 is performed because, depending timing of the entering by the user into the cell range, the receiver 221 receives, as the transmission information, either the advertising information first or the pairing information first.

When the transmission information is the advertising information (step S302; Yes), the content acquirer 212 acquires the advertisement contents based on the advertising information (step S303). Specifically, the content acquirer 212 acquires the advertisement contents corresponding to Major "3" and Minor "10" by radio communication with the content distribution server 300 in a way described above.

On the other hand, when the transmission information is not the advertising information (step S302; No), that is, when the transmission information is the pairing information, the receiver 211 restores a MAC address from divided addresses (step S304). Specifically, the receiver 211 restores the MAC address by adding three divided addresses, "2222", "8AE2" and "70D1".

This restoration is to follow a restoration procedure. For example, in the case of aforementioned three divided addresses, positional information of the three divided addresses, such as that the Major of UUID "D" is in front position, the Minor of UU1D "D" is in the middle position, and the Major of UU1D "E" is in the rear position, is pre-stored. Then, the MAC address may be restored by arranging extracted divided addresses into the top, middle and rear positions. In this way, the MAC address can be restored even when "70D1", which is the MAC address 2, is received first, and then "2222" and "8AE2", which are MAC address 1, are received.

Next, the pairing request transmitter 213 transmits a pairing request signal (step S305). Specifically, the pairing request transmitter 213 transmits a pairing request signal to the information transmission device 100 in response to reception of the pairing information.

Next, the pairing request transmitter 213 determines whether a pairing response signal is received (step S306). In other words, the pairing request transmitter 213 waits until the pairing response signal from the information transmission device 100 is received (step S306; No).

When the pairing response signal is received (step S306; Yes), the pairing request transmitter 213 performs pairing with the information transmission device 100 (step S307). Specifically, the pairing request transmitter 213 performs the pairing with the information transmission device 100 by performing mutual recognition using a recognition number included in the pairing response signal.

Next, the processor 21 announces completion of the pairing (step S308). Specifically, the processor 21 may, as is similar to the side of the information transmission device 100, display on the display 22, which is a terminal screen, that the pairing is completed or the like.

After step S303 or S308, the pairing process ends. In this way, the portable terminal 200 performs, in the cell range, in response to the transmission information, different event processes using application program (the advertisement contents acquisition or automatic pairing).

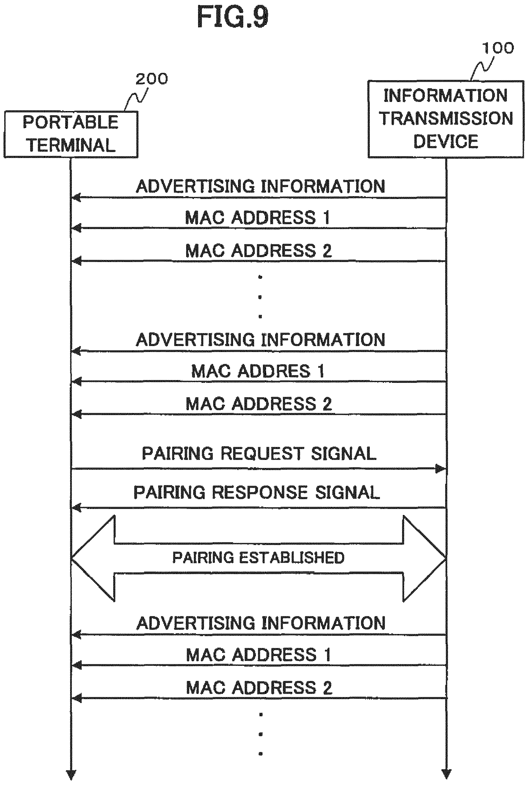

Heretofore, with reference to FIG. 8, the pairing process performed by the portable terminal 200 is explained. Hereinafter, with reference to FIG. 9, a sequence of a pairing between the information transmission device 100 and the portable terminal 200 will be explained.

First, the transmitter 112 of the information transmission device 100 switches and transmits the advertising information and the pairing information (MAC address 1 and MAC address 2) at a time interval of five seconds. When the portable terminal 200 enters the cell range, the pairing request transmitter 213 transmits, in a way described above, a pairing request signal to the information transmission device 100 in response to reception of the pairing information.

Subsequently, the pairer 114 of the information transmission device 100 transmits, in response to reception of paring request signal, a pairing response signal including a recognition number for mutual recognition to the portable terminal 200. Then, the portable terminal 200 and the information transmission device 100 establish paring by performing mutual recognition using a common recognition number.

Transmission of the pairing request signal and the pairing response signal, which is conducted before the paring is established, are performed using communication function in accordance with Bluetooth. The information transmission device 100 keeps transmitting the advertising information and the pairing information in accordance with BLE using the transmitter 112 while performing a process related to the pairing with the portable terminal 200. In other words, the information transmission device 100 performs the pairing process and the transmission process simultaneously in parallel. In this way, the information transmission device 100 can perform a push notification of the advertising information to and an automatic pairing with another portable terminal which is different from the portable terminal 200.

In the information transmission system 10 according to the present embodiment, the information transmission device 100 transmits the pairing information for starting bidirectional communication using a unidirectional transmission function. The portable terminal 200 transmits a pairing request signal in response to reception of the transmitted pairing information, and automatically performs a pairing between devices (between the information transmission device 100 and the portable terminal 200) based on the pairing request signal.

In this way, bidirectional communication in accordance with Bluetooth can be started by the transmission function of a beacon module of the information transmission device 100. Therefore, after the pairing, bidirectional communication in accordance with Bluetooth can be performed between devices, and the information transmission device 100 (signage) can perform, for example, transmission of data such as an image or music in response to an inquiry from the portable terminal 200 (smartphone).

Furthermore, according to the present embodiment, the generator 111 of the information transmission device 100 generates the pairing information being divided into multiple pieces (divided into three pieces in the present embodiment) according to a specification of a data structure. Then, the generator 111 transmits generated paring information being divided into multiple pieces (in the present embodiment, MAC address 1 and MAC address 2). Therefore, lack of data capacity for transmitting the pairing information due to the specification of the data structure never occurs. Therefore, the information transmission device 100 according to the present embodiment can start bidirectional communication with the portable terminal 200 in spite of insufficient data capacity at the time of transmission.

Furthermore, when the portable terminal 200 enters the cell range of the information transmission device 100, in other words, when radio waves in accordance with BLE reaches, the portable terminal 200 can automatically perform a pairing with the information transmission device 100. Therefore, unlike cases in which NFC is utilized, a user does not have to bother to come close to the information transmission device 100 and touch a NFC reader with the portable terminal 200 for pairing. Therefore, pairing coverage can be widened. Thus, attention of a user who completed the pairing can be attracted without a conscious approach by a user to the information transmission device 100, and the information transmission device 100 installed in a store can encourage the user to enter the store.

Furthermore, in the present embodiment, while the information transmission device 100 transmits a MAC address being divided, the portable terminal 200 restores the MAC address from divided addresses. By dividing and restoring the MAC address, the MAC address can be automatically restored regardless of limitation due to a data structure (in the present embodiment, the Major and the Minor each having 2 bytes).

Furthermore, in the present embodiment, the information transmission device 100 transmits advertising information, and the portable terminal 200 acquires, based on the advertising information, advertisement contents and displays it on the terminal screen. Therefore, the purchasing will of a user who looks at the advertisement contents (for example, product coupon information of a store where the information transmission device 100 is installed in) can be stimulated and the user can be encouraged to go into the store. Furthermore, information desired by a user can be displayed on the terminal screen using bidirectional communication in accordance with Bluetooth after the pairing, and synergy effects between the information and the advertisement contents displayed by the push notification may be realized.

The embodiment described above is explained on the assumption that the bidirectional communication is a short distance radio communication in accordance with Bluetooth. However, the present disclosure is not limited thereto. For example, the bidirectional communication may use Wi-Fi. In this case, the information transmission device 100 transmits information necessary for starting bidirectional communication using Wi-Fi (for example, Service Set Identifier (SSID) or a password or the like) as pairing information, and pairing between devices may be performed in a way similar to the embodiment. As Wi-Fi generally has a communication range wider than that of Bluetooth, pairing coverage can be further widened.

The explanation of the embodiment is now completed. Needless to say, the specific configurations of the information transmission device 100 and the portable terminal 200, the contents of each process or the like are not limited to the embodiment described above.

### (Modified Examples)

The embodiment described above is explained on the assumption that the transmitter 112 of the information transmission device 100 transmits the pairing information by radio waves in accordance with BLE. However, the present disclosure is not limited to thereto. For example, the information transmission device 100 may transmit the pairing information by ultrasonic waves using the speaker 13 instead. The configuration of the information transmission device 100 in this case is the same as the one illustrated in FIG. 2. Hereinafter, points related to ultrasonic waves will be explained.

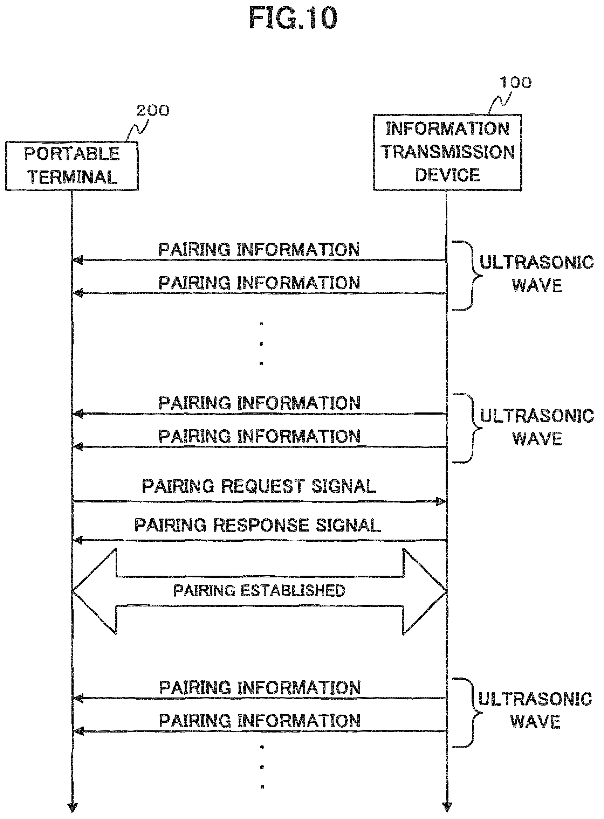

FIG. 10 illustrates a sequence of a pairing between the information transmission device 100 and the portable terminal 200 in a modified example.

First, the transmitter 112 of the information transmission device 100 keeps transmitting the pairing information (MAC address) by ultrasonic waves from the speaker 13. When using ultrasonic waves, there is no limitation related to a data structure. Therefore, the MAC address having 6 bytes can be transmitted without being divided.

Assume that the portable terminal 200 enters the cell range. Then, the receiver 211 of the portable terminal 200 receives ultrasonic waves by the microphone 25. The pairing request transmitter 213 of the portable terminal 200 transmits, in response to reception of the paring information by the microphone 25, a pairing request signal to the information transmission device 100. Then, the pairing is established between the information transmission device 100 and the portable terminal 200 in a way described above.

According to this modified example, by using ultrasonic waves instead of radio waves according to BLE, not only effects of the embodiment described above is realized, but also process load between devices is reduced since division and restoration are not required. In addition, similar to the embodiment described above, the advertising information may be transmitted by ultrasonic waves. In this case, the advertising information may be a URL or an ID for acquiring the advertisement contents.

In addition, in the embodiment described above, each function (the generator 111, the transmitter 112, the pairing request receiver 113, and the pairer 114) of the information transmission device 100 is explained as functions of the processor 11. In other words, an example in which a CPU composing the processor 11 executes each of the functions is explained. However, the present disclosure is not limited thereto. For example, each of aforementioned functions may be realized by an LSI of BLE composing the short distance radio communicator 16 (for example, a CPU included in the LSI). In this way, process load of a main CPU of the information transmission device 100 can be reduced while execution time of each process is shortened.

The embodiment described above is explained assuming that Major "3" and Minor "10" of the advertising information are fixed. However, present disclosure is not limited thereto. For example, each value of the Major and the Minor may be changed as the advertisement contents are updated. Each value of the Major and the Minor may be changed by any method. For example, the information distribution device 100 may automatically update each value of the Major and the Minor when the advertisement contents distributed by the content distribution server 300 are updated. On the other hand, the content distribution server 300 may transmit an alert or the like for advising to update application program so that updated advertisement contents can be acquired by the portable terminal 200.

In addition, in the embodiment described above and the modified example, cases in which there is only one portable terminal 200 are explained. However, present disclosure is not limited to thereto. Actually, the information transmission device 100 automatically performs the pairing process between a plurality of portable terminals (smartphones) passing by neighborhood of the information transmission device 100.

In addition, the embodiment described above and modified example are explained assuming that the information transmission device 100 is a signage. However, the present disclosure is not limited thereto. The information transmission device 100 may be any device which has a transmission function by the beacon and a bidirectional communication function in accordance with Bluetooth (for example, Personal Computer (PC) or the like). In addition, the portable terminal 200 is not limited to a smartphone and may be any device which is portable and has a communication function in accordance with Bluetooth, such as a tablet terminal, a cell-phone, a notebook PC or the like.

In addition, the information transmission device 100 according to the present disclosure is not limited to a specialized device and can be realized by general purpose computer. For example, the information transmission device 100 may be realized by a computer executing a program. A program for realizing functions of the information transmission device 100 may be stored in a non-transitory computer readable recording medium such as a USB (Universal Serial Bus) memory, a CD-ROM (Compact Disc Read Only Memory), a DVD (Digital Video Disc), an HDD or the like, or may be downloaded onto a computer via a network.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. An information transmission device (100) for performing bidirectional communication with a portable terminal (200), the information transmission device **characterized by** comprising:
a processor (11); and
a radio communicator (16) that performs bidirectional communication between the portable terminal and the information transmission device in response to an instruction from the processor,
wherein the processor generates pairing information being divided into multiple pieces according to a predetermined data structure and for starting bidirectional communication between the portable terminal and the information transmission device;
the processor transmits the pairing information;
the processor receives a pairing request signal transmitted by the portable terminal that receives the pairing information; and
the processor performs a pairing operation with the portable terminal in response to the pairing request signal received.

2. The information transmission device according to claim 1,
**characterized in that** the processor generates an address being divided into multiple pieces according to the data structure and uniquely identifies the information transmission device as the pairing information.

3. The information transmission device according to claim 1,
**characterized in that** the processor generates, in addition to the pairing information, advertising information for acquiring advertisement contents; and
the processor alternately transmits the pairing information and the advertising information at a predetermined time interval.

4. The information transmission device according to claim 2,
**characterized in that** the processor generates, in addition to the pairing information, advertising information for acquiring advertisement contents; and
the processor alternately transmits the pairing information and the advertising information at a predetermined time interval.

5. The information transmission device according to claim 1,
**characterized in that** the processor transmits a pairing response signal including a recognition number for mutual recognition to the portable terminal as a response to the pairing request signal and performs mutual recognition using the recognition number with the portable terminal to perform the pairing operation.

6. The information transmission device according to claim 2,
**characterized in that** the processor transmits a pairing response signal including a recognition number for mutual recognition to the portable terminal as a response to the pairing request signal and performs mutual recognition using the recognition number with the portable terminal to perform the pairing operation.

7. The information transmission device according to claim 3,
**characterized in that** the processor transmits a pairing response signal including a recognition number for mutual recognition to the portable terminal as a response to the pairing request signal and performs mutual recognition using the recognition number with the portable terminal to perform the pairing operation.

8. The information transmission device according to claim 1, **characterized by** comprising a display (12) that displays advertisement contents.

9. An information transmission method **characterized by** comprising:
generating step that generates pairing information being divided into multiple pieces according to a predetermined data structure and for starting bidirectional communication with a portable terminal;
transmission step that transmits the pairing information;
reception step that receives a pairing request signal transmitted by the portable terminal that receives the pairing information; and
pairing step that performs a pairing operation with the portable terminal in response to the pairing request signal.

10. A portable terminal (200) that performs bidirectional communication with an information transmission device (100) **characterized by** comprising:
a processor (21); and
a radio communicator (26) that performs bidirectional communication between the information transmission device and the portable terminal in response to an instruction from the processor,
wherein the processor receives pairing information transmitted by the information transmission device;
the processor transmits a pairing request signal to the information transmission device after receiving the pairing information; and
the pairing information is information being divided multiple pieces according to a predetermined data structure and for starting bidirectional communication with the information transmission device.
